(19) Europäisches Patentamt
European Patent Office
Office européen des brevets

(11) **EP 1 345 684 B1**

(12) **FASCICULE DE BREVET EUROPEEN**

(45) Date de publication et mention
de la délivrance du brevet:
**09.05.2012 Bulletin 2012/19**

(51) Int Cl.:
***B01J 19/00*** *(2006.01)*    ***C02F 1/74*** *(2006.01)*
***C02F 11/08*** *(2006.01)*    ***D21C 11/00*** *(2006.01)*

(21) Numéro de dépôt: **01989635.6**

(22) Date de dépôt: **18.12.2001**

(86) Numéro de dépôt international:
**PCT/FR2001/004037**

(87) Numéro de publication internationale:
**WO 2002/049753 (27.06.2002 Gazette 2002/26)**

(54) **PERFECTIONNEMENT AUX PROCEDES D'OXYDATION PAR TRANSFERT D'OXYGENE AU SEIN D'UN MILIEU LIQUIDE DANS UN REACTEUR SOUS PRESSION**

VERBESSERUNGEN BEI OXIDATIONSVERFAHREN DURCH SAUERSTOFFTRANSFER IN EINEM FLÜSSIGEN MEDIUM IN EINEM REAKTOR UNTER DRUCK

IMPROVEMENTS TO OXIDISING PROCESSES BY OXYGEN TRANSFER WITHIN A LIQUID MEDIUM IN A REACTOR UNDER PRESSURE

(84) Etats contractants désignés:
**AT BE CH CY DE DK ES FI FR GB GR IE IT LI LU MC NL PT SE TR**

(30) Priorité: **20.12.2000 FR 0016671**

(43) Date de publication de la demande:
**24.09.2003 Bulletin 2003/39**

(73) Titulaire: **L'AIR LIQUIDE, Société Anonyme pour l'Etude
et l'Exploitation des Procédés Georges Claude
75007 Paris (FR)**

(72) Inventeurs:
• **CAMPO, Philippe**
  **F-78180 Montigny Le Bretonneux (FR)**
• **MUGUET, Michel**
  **F-78180 Montigny Le Bretonneux (FR)**
• **BERTHIER, Nadège**
  **F-91430 Vauhallan (FR)**

(74) Mandataire: **Conan, Philippe Claude
L'Air Liquide
D.S.P.I.
75, quai d'Orsay
75321 Paris Cedex 07 (FR)**

(56) Documents cités:
**WO-A-99/04088    US-A- 4 328 175
US-A- 4 454 077    US-A- 5 972 226**

**Description**

La présente invention a pour objet un perfectionnement aux procédés d'oxydation par transfert d'oxygène au sein d'un milieu liquide dans un réacteur sous pression.

Elle a plus particulièrement pour objet un procédé d'oxydation à l'aide d'un gaz d'oxydation d'un liquide contenu dans un réacteur présentant un volume clos, comprenant au moins un moyen d'introduction du gaz dans le réacteur et au moins un moyen d'introduction du liquide dans le réacteur, au moins un moyen d'évacuation du liquide, au moins un moyen d'évacuation du gaz, procédé dans lequel le liquide contient des composés à oxyder et le gaz d'oxydation contient de l'oxygène, le liquide et le gaz d'oxydation sont introduits dans le réacteur en quantités telles qu'un ciel gazeux est formé au-dessus du liquide contenu dans le réacteur, une purge du ciel gazeux est réalisée.

L'invention s'applique tout particulièrement aux procédés mettant en oeuvre un transfert d'oxygène au sein d'un milieu liquide en vue d'oxyder des composés organiques et/ou minéraux, dissous, et/ou en suspension et/ou dispersés dans ce milieu liquide.

On citera en particulier :

- les procédés d'oxydation par voie humide utilisés en particulier dans l'environnement, pour oxyder notamment les sulfures contenus dans les effluents industriels et traiter, par exemple, les soudes usées de raffinerie,
- les procédés d'oxydation partielle ou totale de liqueurs de papeterie.
- les procédés d'oxydation mis en oeuvre dans le domaine de l'hydrométallurgie, par exemple les procédés d'oxydation des sulfures métalliques,
- les procédés de synthèse chimique mettant en oeuvre au moins une étape d'oxydation. Il peut s'agir aussi bien de procédés d'oxydation de produits minéraux, par exemple de sels ferreux (sulfates ou chlorures) en sels ferriques pour la préparation d'agents floculants notamment ou l'oxydation de différents composés organiques.

On observe une croissance importante de l'utilisation d'oxygène dans de nombreux domaines industriels, notamment dans le domaine de la papeterie, et en particulier dans les usines de pâtes à papier de type kraft.

En effet, non seulement la taille des usines augmente mais les applications de l'oxygène sont de plus en plus nombreuse ; on peut citer par exemple, dans le domaine papetier, l'utilisation de l'oxygène pour la délignification, le stade d'extraction alcaline, le dopage des fours à chaux, le traitement des effluents, l'oxydation de liqueurs et plus récemment la production d'ozone.

Les besoins en oxygène allant en augmentant, il est de plus en plus courant, pour des raisons économiques notamment, de produire l'oxygène sur le site même de son utilisation, recourant pour cela à des systèmes d'auto production, par exemple de type PSA (l'abréviation PSA correspondant à Pressure Swing adsorption) ou VSA (l'abréviation VSA correspondant à Vacuum Swing Adsorption). Ces deux types de procédé consistent à faire passer de l'air sur une colonne d'adsorbants, par exemple de type zéolite. L'azote est fixé préférentiellement par l'adsorbant et un gaz riche en oxygène peut ainsi être récupéré en sortie de colonne ; il est ensuite possible de régénérer l'adsorbant par application d'une légère dépression dans la colonne. En utilisant au minimum deux colonnes en parallèle avec des phases de cycles d'adsorption et de désorption, il est possible de fournir en continu un gaz oxygéné riche en oxygène.

De telles installations fournissent un gaz oxygéné suffisamment pur, contenant généralement de 90 à 98 % d'oxygène compatible avec la plupart des applications traditionnelles de l'industrie, en particulier avec la plupart des applications traditionnelles de l'industrie papetière. Un certain nombre de procédés ne nécessite que quelques ajustements ou modifications, notamment une simple augmentation de débit gazeux, lorsque l'on recourt à ce type de gaz oxygéné ; la présence d'impuretés gazeuses, en particulier azote et argon (gaz non oxydants, inertes) ne perturbe en effet pas ces procédés.

Il n'en va par contre pas nécessairement de même lors de procédés d'oxydation dont le principe de fonctionnement repose sur une consommation quasi-totale du gaz d'oxydation introduit dans un réacteur travaillant à pression constante et dans lesquels la présence de gaz inertes diminue la pression partielle d'oxygène dans le gaz dans des proportions qui dépendent du pourcentage desdits gaz inertes dits aussi inertes dans le gaz utilisé pour réaliser l'oxydation. Cet abaissement de la pression partielle d'oxygène nuit au déroulement de la réaction et rend nécessaire une purge du ciel gazeux. Le terme ciel gazeux est utilisé indifféremment pour désigner l'espace situé au-dessus de la phase liquide dans le réacteur et le gaz contenu dans cet espace ; le contexte permet sans ambiguïté à l'homme du métier de savoir la signification à accorder à ce terme lorsque la distinction s'avère nécessaire). Lorsque le gaz d'oxydation est de l'oxygène pur, il est possible de préserver cette pression partielle et donc de réaliser l'oxydation de la substance à oxyder contenue dans la phase liquide. Lorsque ce gaz n'est pas de l'oxygène pur, il n'en va pas de même, et le ciel gazeux s'enrichit en inertes, diminuant alors la vitesse d'oxydation.

D'une façon générale, dans l'art antérieur, lorsque l'on utilise un gaz d'oxydation contenant des inertes pour l'oxydation de substances contenues dans un milieu liquide par transfert de ce gaz au sein dudit milieu, on prévoit de purger le ciel gazeux.

C'est ainsi que, un réacteur agité conventionnel (Stirred Tank Reactor ou STR) est décrit dans l'article de M. Lawrence M. Litz, dans CEP, Nov. 1985, pp 36-39, intitulé : "A Novel Gas-Liquid Stirred Tank Reactor"). Au sein d'un tel réacteur agité, la distribution des gaz est assurée généralement par un tore percé placé à la base du réacteur, en dessous de l'agitateur mécanique conçu, en principe, de manière à disperser le gaz dans la totalité du milieu réactionnel. Ce type de réacteur permettant d'obtenir des coefficients de transfert élevés et assurant ainsi un mélange gaz-liquide performant prévoit une simple mise à l'air en cas de présence de gaz diluant.

Il est aussi connu de WO-A-99/04088, un procédé d'oxydation de liqueurs blanches ou noires mise en oeuvre sous pression, à haute température, dans un réacteur agité équipé d'un agitateur multi-pales, permettant un mélange gaz/liquide, axial et radial. En aval dudit réacteur, est disposé un séparateur gaz/liquide destiné à séparer les gaz non dissous de la liqueur oxydée.

Il est aussi connu de WO-A-96/13463, un procédé d'oxydation d'effluents, dans un réacteur non conventionnel en présence d'un catalyseur hétérogène, lequel intervient dans la phase gazeuse, ménagée au-dessus de la phase liquide. Le liquide est agité, dans une boucle de recirculation, au moyen d'une pompe extérieure. Disposé dans la boucle de recirculation, un mélangeur en ligne mélange intimement du gaz avec la phase liquide. La phase gazeuse est évacuée par une canalisation.

Il est par ailleurs connu de US-A-4 328 175 et US-A-4 454 077, des réacteurs équipés de moyen de mélange gaz/liquide à flux descendant, constitué d'une turbine hélicoïdale qui crée en surface de la phase liquide un vortex. Le gaz est injecté dans le ciel gazeux du réacteur et est entraîné, mélangé au liquide par effet vortex, au sein de la phase liquide. Le débit de pompage créé par l'hélice permet de disperser le mélange gaz/liquide dans l'ensemble du volume du réacteur. Ces réacteurs sont équipés de moyens de purge.

Toutefois, aucun des procédés de l'art antérieur ne propose de mode de purge spécifiquement adapté au procédé d'oxydation mis en oeuvre. A l'heure actuelle, on ne connaît aucun moyen simple de procéder à la purge du ciel gazeux d'un réacteur de façon contrôlée pour garantir des performances recherchées d'oxydation et de consommation d'oxygène tout au long du procédé mis en oeuvre. Une purge insuffisante du ciel gazeux, conduisant à une diminution excessive de la pression partielle en oxygène, risque de ralentir, voire d'interrompre la réaction d'oxydation mise en oeuvre; une purge trop importante du ciel gazeux élimine certes une quantité plus importante de gaz inertes, préservant ainsi certes une certaine oxydation, mais conduit à une consommation d'oxygène excessive et nuit de ce fait à l'économie du procédé. Le procédé de l'invention résout de manière particulièrement avantageuse le problème du maintien de la teneur en oxygène dans le ciel gazeux dans un réacteur fonctionnant sous pression en procédant en continu à une purge à débit variable contrôlé dans ledit ciel gazeux.

L'invention propose notamment un mode particulièrement simple de contrôle et d'ajustement du débit de purge dans un réacteur fonctionnant à pression constante. L'objet de l'invention est décrit dans le libellé de la revendication indépendante 1. D'autres caractéristiques techniques de l'invention sont décrites dans les revendications dépendantes 2 à 6.

L'invention s'applique à tous les cas où la réaction d'oxydation est réalisée en mettant en oeuvre un gaz d'oxydation contenant, outre l'oxygène, qui est le gaz oxydant, des gaz inertes vis-à-vis de la réaction d'oxydation. Un tel gaz d'oxydation - que l'on appellera indifféremment gaz d'oxydation ou gaz oxygéné - pourra comprendre des proportions variables d'oxygène et de gaz inertes, en particulier des proportions d'oxygène pouvant varier de 90 à 98%.

Ainsi, l'invention propose, dans le cas d'utilisation d'un gaz oxygéné pour l'oxydation dans un réacteur clos de composés contenus dans un milieu liquide par transfert de ce gaz au sein du milieu liquide, un procédé mettant en oeuvre un mode de purge particulièrement adapté du ciel gazeux; il s'applique notamment aux procédés dans lesquels l'introduction du gaz oxygéné dans le réacteur est contrôlée par un régulateur de pression.

Dans de tels procédés, l'introduction d'oxygène se fait automatiquement, elle ne dépend que de sa consommation, c'est à dire de l'avancement de la réaction lequel est fonction des caractéristiques cinétiques du système. L'oxygène introduit correspond uniquement à l'oxygène consommé, avec un strict respect de la stoechiométrie de la réaction.

Lorsque l'on remplace l'oxygène pur par un gaz oxygéné, il dévient, comme exposé précédemment, nécessaire de purger les gaz inertes, l'idéal serait évidemment de n'éliminer que la quantité de gaz inertes présents dans le réacteur avec l'oxygène mais, on comprend aisément que, quel que soit le réacteur et, en particulier, dans un réacteur parfaitement agité muni d'une recirculation de gaz, une partie du gaz oxydant, ici l'oxygène, sera éliminée avec les gaz inertes.

Un objectif de la présente invention est de minimiser les pertes en oxygène lors du procédé.

Un autre objectif de la présente invention est de permettre le déroulement ininterrompu de la réaction mise en oeuvre.

Pour un certain nombre de réactions d'oxydation, la pression partielle d'oxygène dans le ciel gazeux influe directement et/ou indirectement sur l'avancement de la réaction.

La pression partielle influe notamment directement sur l'avancement des réactions pour lesquelles le transfert gaz-liquide joue un rôle essentiel dans le déroulement de la réaction.

Par ailleurs, la pression partielle d'oxygène influe indirectement dans le cas, par exemple, des réactions exothermiques pour lesquelles une augmentation du transfert d'oxygène permet à l'énergie de la réaction de se dégager dans un temps plus court, ce qui permet de travailler à une température plus élevée sans apport d'énergie extérieure.

L'invention consiste ainsi à procéder en continu à une purge à débit variable contrôlé du ciel gazeux de façon à maintenir une pression partielle prédéterminée d'oxygène dans ledit ciel gazeux, la valeur de la pression partielle étant prédéterminée de telle sorte qu'elle conduise au taux d'oxydation que l'on souhaite obtenir dans les conditions du procédé.

En effet, en fonction du type de composés à oxyder, en fonction des conditions opératoires, en particulier en fonction de la pression partielle du gaz oxydant, il est possible d'influer sur le déroulement de la réaction, et notamment sur le pourcentage de composés ayant réagi ainsi que le degré d'oxydation des composés oxydés obtenus. Cet aspect du procédé de l'invention sera illustré plus en détail dans la description qui suit, notamment au travers d'exemples de mise en oeuvre de l'invention. A titre illustratif dans le cas de composés soufrés, on s'intéressera aux différents taux de conversion réalisables des sulfures en thiosulfates et sulfates notamment.

Ainsi, dans le cadre de la présente invention, il a été mis en évidence qu'il était possible de gérer le taux de purge du gaz contenu dans le ciel gazeux de façon à avoir une pression partielle prédéterminée d'oxygène dans ledit gaz correspondant au taux d'oxydation que l'on souhaite obtenir dans les conditions du procédé.

Plus précisément, selon ses caractéristiques essentielles, le procédé selon l'invention est caractérisé en ce que

- la purge du ciel gazeux assure une pression partielle d'oxygène dans le ciel gazeux prédéterminée, la valeur de cette pression partielle correspondant au taux d'oxydation désiré desdits composés;
- on introduit le gaz d'oxydation contenant de 90 à 98% d'oxygène en continu dans le réacteur, le débit d'introduction dudit gaz étant géré de telle sorte que la pression de gaz dans le ciel du réacteur soit sensiblement constante. Ainsi donc, l'invention s'applique à tous les procédés d'oxydation par transfert d'un gaz oxygéné dans un réacteur fonctionnant à pression constante.

Comme exposé précédemment, la pression partielle d'oxygène dans le ciel du réacteur influe directement ou indirectement sur l'avancement de la réaction. L'introduction du gaz d'oxydation étant contrôlée de telle sorte que la pression dans le ciel gazeux soit maintenue constante, l'invention fournit différents moyens permettant de maintenir une pression partielle d'oxygène prédéterminée correspondant au taux d'oxydation désiré des substances dans les conditions du procédé.

En effet, pour une même pression dans le réacteur, la présence d'un pourcentage de gaz inertes dans le gaz utilisé pour réaliser l'oxydation modifie la pression partielle de l'oxygène disponible dans le ciel gazeux. Dans le meilleur des cas, cette pression peut être égale à la pression partielle d'oxygène dans le gaz introduit dans le réacteur diminuée de la pression de vapeur d'eau à la température de réaction. Le maintien d'une valeur constante de la pression partielle d'oxygène nécessite en tout état de cause la réalisation d'une purge.

Pour un réacteur déterminé et pour des conditions déterminées du procédé, la pression partielle d'oxygène disponible dépend du débit de purge imposé dans le ciel du réacteur.

Une bonne connaissance de la ou des réactions mises en jeu dans le procédé permet de définir la pression partielle d'oxygène nécessaire à la conduite du procédé.

Pour un réacteur donné possédant des caractéristiques de transfert données et pour une réaction déterminée, un taux de purge adéquat permet d'établir la pression partielle d'oxygène souhaitée dans le ciel gazeux du réacteur.

Comme cela ressort de l'exposé qui suit, l'invention propose pour maintenir dans le ciel gazeux une pression partielle d'oxygène prédéterminée correspondant au taux d'oxydation désiré des composés à oxyder dans les conditions du procédé de contrôler le débit de purge de façon à ce qu'il représente une fraction prédéterminée du débit d'entrée du gaz d'oxydation dans le réacteur.

Pour un réacteur donné, pour des conditions données de pression, de température et de temps de séjour du liquide dans le réacteur, on asservit le débit de la purge à une mesure du débit d'introduction du gaz d'oxydation, de façon à ce que le débit de purge représente une fraction prédéterminée k dudit débit d'introduction du gaz d'oxydation dans le réacteur.

En effet, lorsqu'on applique un mode de fonctionnement à pression constante au réacteur, le débit de gaz introduit (ou gaz entrant) s'adapte automatiquement à la consommation d'oxygène ; celle-ci étant liée aux variations de débit du liquide et à la concentration en composés à oxyder contenus dans ledit liquide - ceci dans la mesure où les quantités de gaz introduit restent en deçà de la capacité de transfert du réacteur

Toutefois, le système peut avoir à faire face à des variations de concentration en oxygène dans le gaz entrant et/ou à des variations de débit du liquide contenant les substances à oxyder, un moyen de contrôle du débit des fluides entrant dans le réacteur, permet d'assurer que le rapport des débits d'entrée du gaz et du liquide reste sensiblement constant afin d'assurer la bonne marche du procédé.

En effet, pour une réaction déterminée, les rapports de débits de gaz d'oxydation et de liquide entrants dans le réacteur doivent rester compris entre des valeurs définies. Par conséquent, la comparaison des débits de gaz d'oxydation et de liquide entrants permet de vérifier ce rapport et d'apporter, si nécessaire, une correction du débit de purge, par exemple par une plus grande ouverture de la vanne de purge pendant un temps défini.

Dans ce cadre, k qui est égal au rapport du débit de purge sur le débit du gaz d'oxydation entrant dans le réacteur (k est aussi appelé taux de purge) peut être déterminé soit par calcul si on a la connaissance de l'ensemble des données cinétiques des réactions et du coefficient de transfert du réacteur, soit expérimentalement.

Les conditions opératoires sont définies pour un réacteur, une température, un temps de séjour, une composition de liquide à oxyder, une concentration en oxygène dans le gaz d'oxydation et une pression de fonctionnement donnés, en s'assurant de ce que le débit de gaz d'oxydation entrant dans le réacteur doit toujours être inférieur au débit de gaz pouvant être transféré par ledit réacteur. Il est à noter cependant, que si cette condition est impérative pour la détermination de k par le calcul, elle l'est toutefois moins pour la détermination expérimentale. En effet, la valeur trouvée expérimentalement pourra toujours être exploitée si on ne s'éloigne pas des conditions de fonctionnement dans lesquelles elle a été trouvée.

La prédétermination expérimentale de k pourra notamment être réalisée de la manière suivante :

deux débitmètres sont installés, un premier permettant la mesure du débit du gaz d'oxydation ($Q_{entrée}$), et un second permettant la mesure du débit du gaz de purge ($Q_{purge}$),

les conditions du traitement d'oxydation étant établies, on réalise la réaction d'oxydation avec un débit de purge au minimum égal au débit des gaz inertes entrant dans le réacteur, augmenté d'un faible pourcentage d'oxygène (valeur calculée en gaz sec). En général ce faible pourcentage représente au minimum environ 5% du débit d'oxygène entrant, cela pour ne pas bloquer le système.

Les conditions étant stabilisées, on mesure la concentration d'oxygène dans le gaz de purge, mesure réalisée sur le gaz refroidi et sec.

Connaissant la témperature dans le réacteur et donc la pression partielle d'eau, connaissant la pression dans le réacteur ainsi que les teneurs en oxygène et en gaz inertes du gaz de purge, il est possible de déterminer la pression partielle d'oxygène dans le réacteur.

Celle-ci ($Po_2$) est égale au pourcentage d'oxygène dans la purge multiplié par la pression dans le réacteur.

En fonction de la pression partielle d'oxygène souhaitée, on augmente ou diminue l'ouverture de la vanne de purge soit par conséquent, le taux k de purge, qui est à égal au rapport du débit de purge ($Q_{purge}$) au débit de gaz d'oxydation entrant ($Q_{entrée}$) soit :

$$Q_{purge} = Q_{entrée} * k \quad ( \text{lire : débit de purge = produit du débit de gaz d'oxydation entrant par le taux de purge})$$

Toujours dans cadre, selon un autre mode de réalisation, k peut être prédéterminé par le calcul à partir de la capacité de transfert du réacteur et de ladite pression partielle d'oxygène souhaitée dans le ciel dudit réacteur, correspondant au taux d'oxydation désiré des composés à oxyder.

Comme cela ressort de l'exposé qui suit, ce mode de réalisation est aisé à mettre en oeuvre.

Il nécessite de connaître la capacité de transfert du réacteur, laquelle capacité est mesurée suivant les conditions standards connues par l'homme du métier. La capacité de transfert peut être exprimée en moles de gaz transférées par litre de volume réactionnel et par seconde (mole / l/S).

A la pression partielle d'oxygène $Po_2$ définie et souhaitée dans le réacteur, correspond un pourcentage d'oxygène et de gaz inertes dans le gaz de purge.

La pression partielle d'oxygène définie est directement proportionnelle au pourcentage d'oxygène dans le gaz de purge.

Le pourcentage d'oxygène est donné, pour un gaz sec, (abstraction faite de la pression de vapeur d'eau lors de la mesure).

k est égal au rapport : débit de purge /débit de gaz d'oxydation entrant k = $Q_{purge}/Q_{entrée}$.

k est aussi égal au rapport : concentration en gaz inertes dans le gaz entrant dans le réacteur / concentration en gaz inertes dans le gaz de purge (exprimés en %).

En effet, pour que le bilan massique des gaz inertes soit correct, il faut que :

$$Q_{purge} * \% \text{ inertes dans la purge} = Q_{entrée} * \% \text{ inertes dans le gaz}$$

entrant.

On peut en conclure que :

k = % inertes dans le gaz entrant / % inertes dans la purge.

Les résultats sont bien évidemment valables uniquement pour des valeurs de k inférieures ou égales à 1.

Le débit de purge est donc :

$$Q_{purge} = k * Q_{entrée}$$

$$Q_{purge} = (\% \text{ inertes dans gaz entrant} / \% \text{ inertes dans purge})$$

$$Q_{entrée}$$

Par ailleurs, en désignant par V le volume nominal de gaz d'oxydation nécessaire pour obtenir un certain taux d'oxydation recherché d'un litre de liquide et par $Q_{liquide}$, le débit d'entrée de ce liquide.

On a : $Q_{entrée} = V * Q_{liquide}$

On comprend alors que le système de purge peut être géré en maintenant la valeur k à la valeur prédéterminée par le calcul ou prédéterminée expérimentalement comme exposé ci-dessus mais, en outre, de manière avantageuse, on surveillera le rapport $Q_{entrée}/Q_{liquide}$ et on interviendra sur le débit de purge dès que ce rapport s'écartera des valeurs utilisées pour la prédétermination de la valeur de k.

Ainsi donc, et toujours selon le procédé, de façon avantageuse, on modifie temporairement le débit de purge lorsque le rapport des débits de gaz d'oxydation introduit et de liquide introduit dans le réacteur se trouve à l'extérieur d'une fourchette prédéterminée encadrant la valeur du rapport des débits de gaz d'oxydation et liquide introduits (entrants) utilisés pour la détermination de la valeur de k.

D'une façon générale, le procédé peut s'appliquer à tous les procédés d'oxydation de substances en solution, en suspension ou en dispersion dans un milieu liquide, par transfert dans ledit milieu liquide d'un gaz oxygéné mis en oeuvre dans un réacteur travaillant à pression constante.

Le procédé de l'invention s'applique avantageusement dans les cas pour lesquels la pression dans le réacteur est comprise entre 1,5 et 300 bar absolus, de préférence entre 3 et 100 bar.

Le procédé selon l'invention s'applique avantageusement dans les cas où la température à laquelle s'effectue la réaction d'oxydation est comprise dans une large gamme, en particulier entre -50 et 300 °C, de préférence entre 20 et 150°C.

On notera également que la composition du gaz oxygéné entrant dans le réacteur peut varier, elle aussi.

Le procédé s'applique tout particulièrement aux cas où l'on utilise comme gaz oxygéné un gaz issu d'un procédé de type VSA ou PSA, c'est-à-dire un gaz contenant généralement de 90 à 98 % d'oxygène. Le procédé s'applique également aux cas où le gaz oxygéné est un gaz dit "off gaz" récupéré à l'issue d'une étape d'ozonation.

Le gaz oxygéné injecté dans le réacteur contient plus préférentiellement de 90 à 98 % d'oxygène. Le reste du gaz est constitué de gaz inertes vis-à-vis de la réaction d'oxydation, en particulier d'azote ou d'argon.

Le procédé de l'invention peut être mis en oeuvre dans tout type de réacteur susceptible de travailler à pression constante.

Préférentiellement, le réacteur est muni de moyens permettant le transfert du gaz au sein du liquide.

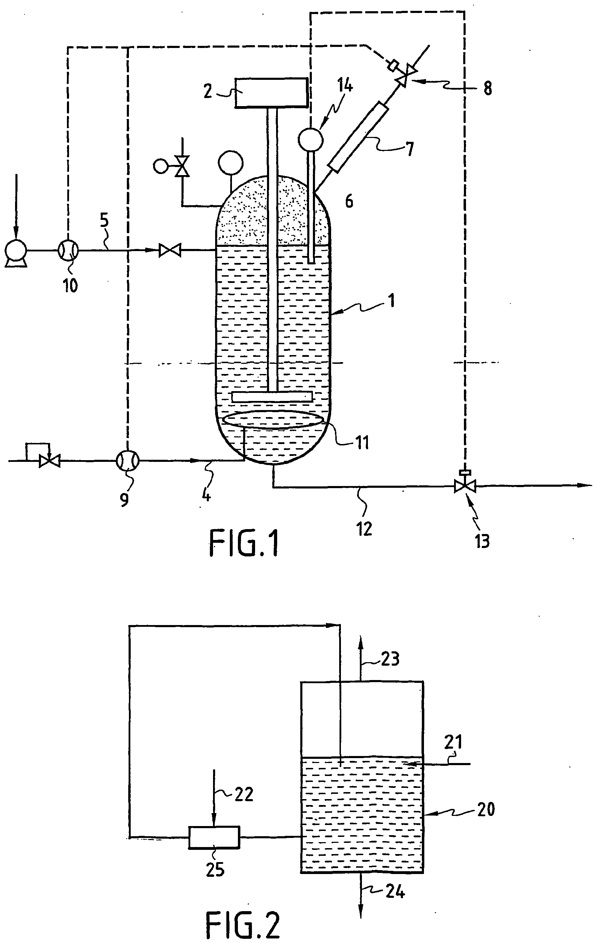

Deux types de dispositif sont particulièrement avantageux pour la mise en oeuvre du procédé de l'invention. Ainsi, de manière avantageuse, le procédé de l'invention est caractérisé en ce que le transfert de gaz au sein du liquide est assuré par une turbine auto-aspirante, ainsi que représenté sur le schéma de la figure 1. Selon un autre mode de réalisation, le procédé de l'invention est caractérisé en ce que le réacteur est muni d'une boucle de recirculation du liquide comprenant un hydro-éjecteur, assurant ledit transfert du gaz au sein du liquide. Un dispositif de mise en oeuvre de cette variante est représenté sur le schéma de la figure 2.

Plus précisément, la figure 1 représente un réacteur 1 muni d'un dispositif d'agitation 2, de moyens de chauffage ou de refroidissement classiques non représentés.

Le gaz oxygéné arrive dans le réacteur par l'intermédiaire de la tubulure 4 et d'un tore d'injection 11 placé sous la turbine comme indiqué sur la figure 1. Une autre possibilité consisterait à introduire le gaz dans le ciel gazeux. Le liquide contenant les substances à oxyder entre dans le réacteur par la tubulure 5. La tubulure 6 permet de réaliser la purge du ciel gazeux. Cette tubulure est munie de moyens de refroidissement 7, ce refroidissement étant assuré par exemple par une circulation d'eau. La vanne 8 permet de régler le débit de purge. L'ouverture de cette vanne est asservie à la fois à la mesure du débit d'arrivée du gaz oxygéné réalisée par l'intermédiaire du débitmètre 9 placé sur la canalisation 4 et à la mesure du débit d'entrée du milieu liquide contenant les substances à oxyder réalisée par l'intermédiaire du débitmètre 10 placé sur la canalisation 5.

Le liquide oxydé sort par la canalisation 12. Son débit est contrôlé par la vanne 13 dont l'ouverture est régulée par l'intermédiaire d'une sonde de niveau 14.

Les différents asservissements sont matérialisés par des pointillés sur la figure 1.

La figure 2 représente un autre dispositif utilisable pour la mise en oeuvre de l'invention.

Dans le dispositif schématisé sur la figure 2, une boucle de recirculation munie d'un hydro-éjecteur 25 et d'une pompe, non représentée, permet de faire circuler le liquide pendant l'étape d'oxydation.

Le liquide est introduit dans le réacteur 20 par l'intermédiaire de la canalisation 21. Le gaz oxygéné entre dans le réacteur par l'intermédiaire de la canalisation 22. Sur la figure 2, l'introduction de gaz oxygéné est réalisée directement dans la boucle de recirculation, au niveau de l'hydro-éjecteur, ce qui constitue un mode de réalisation avantageux Toutefois, il serait également possible d'introduire le gaz oxygéné dans le ciel gazeux du réacteur au niveau de l'hydro-éjecteur. La purge peut être faite par l'intermédiaire de la canalisation 23. Le liquide oxydé est soutiré par l'intermédiaire de la canalisation 24.

La boucle de recirculation permet l'agitation du liquide par l'intermédiaire de l'hydro-éjecteur. Elle permet de recycler le gaz et d'assurer le transfert du gaz dans le liquide.

Dans ce dispositif comme dans le dispositif précédent, la purge sera réalisée en asservissant la vanne de sortie du gaz de purge à une mesure du débit d'entrée du gaz oxygéné et du débit d'entrée du milieu liquide contenant les substances à oxyder.

Le procédé de l'invention est applicable à tout milieu liquide contenant des substances à oxyder qui se trouvent en solution, en suspension ou en dispersion dans ce milieu.

Il s'applique à toutes les réactions d'oxydation mettant en oeuvre un gaz oxygéné transféré dans un milieu liquide au sein d'un réacteur. On citera en particulier:

- les procédés d'oxydation par voie humide utilisés en particulier dans l'environnement, pour oxyder notamment les sulfures contenus dans les effluents industriels et traiter, par exemple, les soudes usées de raffinerie,
- les procédés d'oxydation partielle ou totale de liqueurs de papeterie.
- les procédés d'oxydation mis en oeuvre dans le domaine de l'hydrométallurgie, par exemple les procédés d'oxydation des sulfures métalliques,
- les procédés de synthèse chimique mettant en oeuvre au moins une étape d'oxydation. Il peut s'agir aussi bien de procédés d'oxydation de produits minéraux, par exemple de sels ferreux (sulfates ou chlorure) en sels ferriques pour la préparation d'agents floculants notamment ou l'oxydation de différents composés organiques.
- les procédés d'oxydation par voie humide utilisés, en particulier dans l'environnement, par exemple pour l'oxydation de flux usés de raffinerie,
- les procédés d'oxydation en hydrométallurgie, par exemple pour l'oxydation de sulfures métalliques,
- les procédés d'oxydation utilisés, en particulier en synthèse chimique. Il peut s'agir aussi bien de l'oxydation de produits minéraux, par exemple l'oxydation de sulfate ou de chlorure ferreux en sel ferrique correspondant pour la préparation d'agents floculants que de l'oxydation de différents composés organiques.

Le procédé de l'invention est particulièrement bien adapté à l'oxydation de liqueurs de papeterie. C'est ce type de réaction qui est présenté dans l'exemple qui suit donné à titre purement illustratif et non limitatif de l'invention.

EXEMPLE :Oxydation des sulfures contenus dans une liqueur blanche de papeterie

1 - Principe du procédé

a) Détermination de Vo volume de gaz oxygéné (d'oxydation) nécessaire à la réaction d'oxydation (en l'absence de purge).
Le volume Vo de gaz oxygéné, nécessaire pour atteindre le taux d'oxydation désiré dans le cas de l'exemple traité ici, est exprimé par litre de liqueur et peut être déterminé de la façon suivante :

$$Vo = (c/M) * 22,4 * y * x$$

c : concentration en sulfure dans la liqueur en g/l,
M : masse molaire du soufre,
y : l + taux de composés inertes ($N_2$, Ar) dans le gaz oxygéné entrant,
x : 1 + taux de conversion en sulfate souhaité dans la liqueur oxydée.

b) Détermination expérimentale du taux de purge k
Pour différentes pressions partielles d'oxygène et pour le réacteur utilisé, les différents taux de conversion des sulfures en thiosulfate et sulfate ont été déterminés expérimentalement.
Expérimentalement aussi, il a été procédé à la détermination du taux de purge nécessaire pour une pression partielle d'oxygène souhaitée, k, qui représente un certain pourcentage du débit de gaz entrant dans le réacteur; ce pourcentage k, comme indiqué précédemment dans la description, pouvant être déterminé expérimentalement ou calculé.
Le volume de gaz nécessaire par litre de liqueur est donc égal à

$$V = Vo + Vo * k$$

c) Gestion du procédé
Comme il a été décrit précédemment, le suivi du ratio entre le débit du gaz oxygéné entrant et le débit de milieu liquide entrant permet de s'assurer du bon fonctionnement du procédé. Des actions correctives sur la purge peuvent être établies en cas de dérive par rapport à la valeur définie.

2 - Application au cas de l'oxydation d'une liqueur blanche avec un gaz provenant d'un VSA contenant 7 % d'inertes.

a) Détermination de Vo.
Pour un gaz oxygéné contenant 7% de gaz inertes, une concentration initiale en sulfure de 20 g/l, un taux de sulfates souhaité dans la liqueur oxydée de 80 % (taux de conversion), une pression partielle d'oxygène de 5,3bar (déterminée expérimentalement), une pression totale de 10bar, on a les paramètres suivants :

c=20
M=32
y = 1+ 0,07 = 1,07 (7 % d'inerte dans le gaz d'entrée)
x = 1+0,8 = 1,8 (pour 80 % de sulfate)

Soit une consommation de gaz oxygéné de:

Vo $_{gaz}$ = (20/32)*22.4*1,07*1,8 = 27,0 Nl/litre de gaz oxygéné à 93 % par litre de liqueur.

b) Détermination du taux de purge k.
Dans le cas présent, on a :

- Pourcentage d'inertes dans le gaz d'entrée = 7 %.
- Pression partielle d'oxygène nécessaire pour obtenir les conditions recherchées égale à 5,3 bar.
- Température de réaction de 100°C soit 1 bar de pression de vapeur d'eau.
- Pression totale de 10 bar,
- Soit pression de gaz dans le réacteur (= pression totale - pression de vapeur d'eau) = 10 -1 = 9 bar, d'où :
- Pourcentage d'oxygène dans le gaz de purge = (pression partielle d'oxygène souhaitée Po$_2$/ pression des gaz dans le réacteur)*100 = (5,3/9)*100 = 58,9 %, d'où
- % inertes(purge) = 100 - 58,9 = 41,1 %.

Le facteur k est donc égal dans les conditions ci-dessus à :

k = % inertes (entrée)/%s inerte(purge) = 7/41,1 = 0,17.

Il s'ensuit donc, qu'en application du procédé de l'invention, on réglera, dans le cas présent, le débit de purge à une valeur de 17 % du débit d'entrée de gaz oxygéné de façon à maintenir la pression partielle d'oxygène souhaitée dans le réacteur.

Par ailleurs, le volume V de gaz nécessaire par litre de liqueur est :

$$V = V_0 + V_0 k = 27 + 27 * 0.17 = 31.6 \text{ Nl/l de gaz oxygéné}$$

c) Contrôle

La vanne de purge est maintenue ouverte de telle façon que le débit de purge soit égal à 17 % du débit du gaz entrant et que le ratio débit de gaz entrant sur débit liquide est égal à la valeur V déterminée précédemment (31,6) à plus ou moins 5 %.

En cas de changement de plus de 5 % de cette valeur, les actions correctives suivantes peuvent être, par exemple, appliquées :

- une diminution de la valeur de plus de 5 % entraîne une ouverture de la vanne de purge à 50 % de son ouverture maximum pendant une minute,
- une augmentation de la valeur de plus de 5 % entraîne une fermeture de la vanne de purge pendant 5 secondes.

## Revendications

1. Procédé d'oxydation à l'aide d'un gaz d'oxydation d'un liquide contenu dans un réacteur présentant un volume clos, comprenant:

. au moins un moyen d'introduction du gaz dans le réacteur et au moins un moyen d'introduction du liquide dans le réacteur,
. au moins un moyen d'évacuation du liquide,
. au moins un moyen d'évacuation du gaz,

procédé dans lequel :

- le liquide contient des composés à oxyder et le gaz d'oxydation contient de l'oxygène,
- le liquide et le gaz d'oxydation sont introduits dans le réacteur en quantités telles qu'un ciel gazeux est formé au-dessus du liquide contenu dans le réacteur,
- le réacteur est muni de moyens d'agitation permettant le transfert du gaz au sein du liquide contenu dans le réacteur,
- une purge du ciel gazeux est réalisée,

**caractérisé en ce que** :

- on introduit le gaz d'oxydation contenant de 90 à 98% d'oxygène en continu dans le réacteur, le débit d'introduction dudit gaz étant géré de telle sorte que la pression de gaz dans le ciel du réacteur soit sensiblement constante,
- la purge assure une pression partielle d'oxygène dans le ciel gazeux prédéterminée, la valeur de cette pression partielle correspondant au taux d'oxydation désiré des dits composés,
- pour des conditions données de pression de gaz dans le ciel dudit réacteur, de température et de temps de séjour du liquide dans ledit réacteur, le débit de la purge est asservi à une mesure du débit d'introduction du gaz d'oxydation, de façon à ce que le débit de purge représente une fraction prédéterminée k du débit d'introduction dudit gaz d'oxydation dans ledit réacteur.

**2.** Procédé selon la revendication 1 **caractérisé en ce que** la pression de gaz dans le ciel gazeux est comprise entre 1,5 et 300 bars absolus, de préférence entre 3 et 100 bar absolus.

**3.** Procédé selon la revendication 1 ou la revendication 2, **caractérisé en ce que** la température d'oxydation est comprise entre 20 et 150°C.

**4.** Procédé selon l'une des revendications 1 à 3, **caractérisé en ce que** le transfert du gaz au sein du liquide est assuré par une turbine auto-aspirante.

**5.** Procédé selon l'une des revendications 1 à 3, **caractérisé en ce que** le réacteur est muni d'une boucle de recirculation du liquide comprenant un hydro-éjecteur, assurant ledit transfert.

**6.** Procédé selon l'une des revendications 1 à 5, **caractérisé en ce que** le liquide est constitué de liqueurs de papeterie.

**Claims**

**1.** Process for oxidising, by means of an oxidation gas, a liquid contained in a reactor having a closed volume, comprising:

- at least one means for feeding the gas into the reactor and at least one means for feeding the liquid into the reactor,
- at least one means for withdrawing the liquid,
- at least one means for withdrawing the gas,

in which process:

- the liquid contains compounds to be oxidised and the oxidation gas contains oxygen,
- the liquid and the oxidation gas are fed into the reactor in amounts such that a gas overhead is formed above the liquid contained in the reactor,
- the reactor is provided with stirring means allowing the gas to be transferred into the liquid contained in the reactor,
- a purge of the gas overhead is carried out,

**characterised in that**:

- the oxidation gas containing 90 to 98 % oxygen is fed continuously into the reactor, the feed rate of said gas being managed in such a way that the gas pressure in the overhead of the reactor is substantially constant,
- the purging ensures a predetermined oxygen partial pressure in the gas overhead, the value of this partial pressure corresponding to the desired rate of oxidation of said compounds,
- for given conditions regarding gas pressure in the overhead of said reactor, temperature, and residence time of the liquid in said reactor, the purge rate is slaved to a measurement of the feed rate of the oxidation gas in such a way that the purge rate represents a predetermined fraction k of the feed rate of said oxidation gas into the reactor.

**2.** Process according to claim 1, **characterised in that** the gas pressure in the gas overhead is between 1.5 and 300 bar absolute, preferably between 3 and 100 bar absolute.

**3.** Process according to either claim 1 or claim 2, **characterised in that** the oxidation temperature is between 20 and 150 °C.

**4.** Process according to any one of claims 1 to 3, **characterised in that** the gas is transferred into the liquid by a self-priming impeller.

**5.** Process according to any one of claims 1 to 3, **characterised in that** the reactor is provided with a liquid recirculation loop comprising a hydro-ejector, ensuring said transfer.

**6.** Process according to any one of claims 1 to 5, **characterised in that** the liquid consists of papermaking liquors.

**Patentansprüche**

1. Verfahren zur Oxidation einer Flüssigkeit mittels eines Oxidationsgases, die in einem Reaktor enthalten ist, der ein geschlossenes Volumen aufweist, umfassend:

   - zumindest ein Mittel zum Einleiten des Gases in den Reaktor und zumindest ein Mittel zum Einleiten der Flüssigkeit in den Reaktor,
   - zumindest ein Mittel zum Ableiten der Flüssigkeit,
   - zumindest ein Mittel zum Ableiten des Gases,

   wobei bei dem Verfahren

   - die Flüssigkeit Zusammensetzungen enthält, die zu oxidieren sind, und das Oxidationsgas Sauerstoff enthält,
   - die Flüssigkeit und das Oxidationsgas in den Reaktor in solchen Mengen eingeleitet werden, dass ein Gaskopfraum über der in dem Reaktor enthaltenen Flüssigkeit gebildet wird,
   - der Reaktor mit Rührmitteln versehen ist, welchen den Gastransfer im Innern der in dem Reaktor enthaltenen Flüssigkeit ermöglichen,
   - eine Entleerung des Gaskopfraums durchgeführt wird,

   **dadurch gekennzeichnet, dass**
   das Oxidationsgas, das zu 90 bis 98 % Sauerstoff enthält, kontinuierlich in den Reaktor eingeleitet wird, wobei die Einleitungsmenge des Gases derart gesteuert wird, dass der Gasdruck in dem Gaskopfraum im Wesentlichen konstant ist,
   die Entleerung einen vorab festgelegten Sauerstoffteildruck in dem Gaskopfraum sicherstellt, wobei der Wert dieses Teildrucks im Wesentlichen der gewünschten Oxidationsrate der Zusammensetzungen entspricht,
   bei bestimmten Bedingungen hinsichtlich des Gasdrucks in dem Kopfraum des Reaktors, der Temperatur und der Verweildauer der Flüssigkeit in dem Reaktor die Entleerungsmenge auf eine Messung der Einleitungsmenge des Oxidationsgases geregelt wird, derart, dass die Entleerungsmenge einen vorab festgelegten Bruchteil k der Einleitungsmenge des Oxidationsgases in den Reaktor darstellt.

2. Verfahren nach Anspruch 1, **dadurch gekennzeichnet, dass** der Gasdruck in dem Gaskopfraum zwischen 1,5 und 300 bar absolut, vorzugsweise zwischen 3 und 100 bar absolut beträgt.

3. Verfahren nach Anspruch 1 oder Anspruch 2, **dadurch gekennzeichnet, dass** die Oxidationstemperatur zwischen 20 und 150 °C beträgt.

4. Verfahren nach einem der Ansprüche 1 bis 3, **dadurch gekennzeichnet, dass** der Gastransfer im Innern der Flüssigkeit durch eine selbstansaugende Turbine sichergestellt wird.

5. Verfahren nach einem der Ansprüche 1 bis 3, **dadurch gekennzeichnet, dass** der Reaktor mit einer Rezirkulationsschleife für die Flüssigkeit versehen ist, die einen Hydroejektor umfasst, der den Transfer sicherstellt.

6. Verfahren nach einem der Ansprüche 1 bis 5, **dadurch gekennzeichnet, dass** die Flüssigkeit von Papiermühlenlaugen gebildet ist.

FIG.1

FIG.2

**EP 1 345 684 B1**

RÉFÉRENCES CITÉES DANS LA DESCRIPTION

**Documents brevets cités dans la description**

- WO 9904088 A
- WO 9613463 A
- US 4328175 A
- US 4454077 A

**Littérature non-brevet citée dans la description**

- **M. Lawrence M. Litz.** A Novel Gas-Liquid Stirred Tank Reactor. *CEP,* Novembre 1985, 36-39